# FASCICULE DE BREVET EUROPEEN

(11) **EP 3 676 431 B1**
(45) Date de publication et mention de la délivrance du brevet: **14.07.2021**
(21) Numéro de dépôt: 18773796.0
(22) Date de dépôt: 29.08.2018
(51) Int. Cl.: D03D 15/275, D03D 15/267, D03D 1/00, D03D 25/00, D03D 11/00

(54) **TEXTURE FIBREUSE TISSEE POUR LA FORMATION D'UNE PREFORME DE CARTER**
GEWEBTE FASERSTRUKTUR ZUR BILDUNG EINER GEHÄUSEVORFORM
WOVEN FIBROUS STRUCTURE FOR FORMING A CASING PREFORM

(30) Priorité: 30.08.2017 FR 1757977
(43) Date de publication de la demande: 08.07.2020
(73) Titulaire: Safran Aircraft Engines, 75015 Paris (FR)
(72) Inventeur: LE HONG, Son, 77550 Moissy-Cramayel (FR); COUPE, Dominique Marie Christian, 77550 Moissy-Cramayel (FR); GABILLON, Martin, 77550 Moissy-Cramayel (FR); GRELIN, Hervé, 77550 Moissy-Cramayel (FR); MAHIEU, Jean-Noël, 77550 Moissy-Cramayel (FR); MOUSILLAT, Sylvain, 77550 Moissy-Cramayel (FR); MORTIER, Roland José Yann, 77550 Moissy-Cramayel (FR); RAYMOND, Frédéric, 77550 Moissy-Cramayel (FR)
(74) Mandataire: Cabinet Beau de Loménie
(86) Numéro de dépôt international: PCT/FR2018/052117
(87) Numéro de publication internationale: WO 2019/043333

(56) Documents cités:
- CN-A- 101 713 115
- FR-A1- 3 045 448
- US-A- 5 538 781
- ELIAS RANDJBARAN ET AL: "Hybrid Composite Laminates Reinforced with Kevlar/Carbon/Glass Woven Fabrics for Ballistic Impact Testing", THE SCIENTIFIC WORLD JOURNAL, vol. 2014, 1 janvier 2014 (2014-01-01), pages 1-7, XP055463460, ISSN: 2356-6140, DOI: 10.1155/2014/413753
- HOSUR M V ET AL: "Studies on the low-velocity impact response of woven hybrid composites", COMPOSITE STRUCTURES, ELSEVIER SCIENCE LTD, GB, vol. 67, no. 3, 1 mars 2005 (2005-03-01), pages 253-262, XP027651510, ISSN: 0263-8223 [extrait le 2005-03-01]

## Description

La présente invention concerne un procédé de fabrication d'une texture fibreuse qui peut être utilisée, en particulier mais non exclusivement, pour former le renfort fibreux d'un carter de soufflante de moteur aéronautique en matériau composite.

### Arrière-plan de l'invention

La fabrication d'un carter en matériau composite débute par la réalisation d'une texture fibreuse sous forme de bande, la texture fibreuse étant réalisée par tissage tridimensionnel entre une pluralité de couches de fils de chaîne et une pluralité de couches de fils de trame. La texture fibreuse ainsi obtenue est enroulée sur plusieurs tours sur un moule ou outillage présentant la forme du carter à réaliser et maintenue entre le moule et des segments formant contre-moule de manière à obtenir une préforme fibreuse.

Une fois la préforme fibreuse réalisée, c'est-à-dire à la fin de l'enroulement de la texture fibreuse, l'outillage portant la préforme fibreuse est fermé par des contres-moules puis transporté jusqu'à une étuve ou four dans lequel la densification de la préforme par une matrice est réalisée, la matrice pouvant être notamment obtenue par injection et polymérisation d'une résine dans la préforme fibreuse.

Les carters doivent assurer une fonction de rétention en retenant les débris ingérés à l'intérieur du moteur, ou les aubes ou fragments d'aubes projetés par centrifugation, afin d'éviter qu'ils ne traversent le carter et n'atteignent d'autres parties de l'aéronef.

Par exemple le document FR 3 045 448 décrit un carter de rétention pour turbine à gaz et son procédé de fabrication dans lequel une bande fibreuse est enroulée autour d'un mandrin puis des bandes de tissu sont insérées entre les différents tours de la bande enroulée.

Les carters de l'état de la technique assurent globalement cette fonction de manière satisfaisante. Il demeure toutefois possible d'améliorer davantage encore la résistance mécanique de certains carters à l'impact avec une aube, lorsqu'il y a détachement de cette dernière et projection de celle-ci sur le carter.

### Objet et résumé de l'invention

L'invention vise, selon un premier aspect, une texture fibreuse présentant une forme de bande s'étendant dans une direction longitudinale sur une longueur déterminée entre une partie proximale et une partie distale et dans une direction latérale sur une largeur déterminée entre un premier bord latéral et un deuxième bord latéral, la texture fibreuse présentant un tissage tridimensionnel ou multicouche entre une pluralité de couches de fils ou torons de chaîne s'étendant dans la direction longitudinale et une pluralité de couches de fils ou torons de trame s'étendant dans la direction latérale,
caractérisée en ce qu'une première portion de la texture fibreuse présente entre la partie proximale et une partie intermédiaire de la texture fibreuse comporte des fils ou torons de trame en fibres de carbone et en ce qu'une deuxième portion de la texture fibreuse présente entre la partie intermédiaire et la partie distale comporte des fils ou torons de trame en fibres de verre.

La première portion de la texture fibreuse est rigide et la deuxième portion de la texture fibreuse est élastiquement déformable. Les termes « rigide » et « élastiquement déformable » doivent être entendus de façon relative, c'est-à-dire que la première portion est plus rigide que la deuxième portion, et corrélativement que la deuxième portion est plus élastiquement déformable que la première. En d'autres termes, la première portion présente une raideur supérieure à la deuxième portion, la différence de raideur étant conférée par la présence de fibres de verre, plus souples, et par la présence de fibres de carbone, plus rigides. Les fibres de verre présentent en effet généralement un allongement à la rupture supérieur à celui des fibres de carbone : moins de 2% pour les fibres de verre, et plus de 3% pour les fibres de carbone.

Dans un exemple de réalisation, la deuxième portion de la texture fibreuse peut comprendre plus de fils ou torons en fibres de verre que la première portion. En d'autres termes, un taux volumique en fils ou torons en fibres de verre dans la deuxième portion peut être supérieur au taux volumique en fils ou torons en fibres de verre dans la première portion (le taux volumique étant défini par rapport au volume occupé par l'ensemble des fils ou torons de la portion considérée). La première portion de la texture fibreuse peut comprendre plus de fils ou torons en fibres de carbone que la deuxième portion. En d'autres termes, un taux volumique en fils ou torons en fibres de carbone dans la première portion peut être supérieur au taux volumique en fils ou torons en fibres de carbone dans la deuxième portion. Seule la deuxième portion de la texture fibreuse peut comprendre des fils ou torons en fibres de verre.

La texture fibreuse est destinée à être enroulée en plusieurs tours afin de former un renfort fibreux de carter en matériau composite. La première portion est destinée à former la partie radialement interne de ce renfort fibreux (premiers tours de l'enroulement). La deuxième portion est destinée à former la partie radialement externe de ce renfort fibreux (derniers tours de l'enroulement).

Les inventeurs ont constaté qu'il était possible d'améliorer la résistance du carter à l'impact avec une aube détachée en conférant une rigidité importante aux premiers tours du renfort fibreux de ce carter, et un caractère déformable aux derniers tours de ce renfort, ces derniers tours étant en effet les plus sollicités en déformation lors de l'impact.

Ainsi, la texture fibreuse selon l'invention comprend des fils ou torons de trame en carbone dans la première portion, destinée à former le début de l'enroulement et située du côté de l'impact avec l'aube, afin de conférer une rigidité élevée à cette première portion. En outre, la texture fibreuse selon l'invention comprend des fils ou torons de trame en verre dans la deuxième portion, qui est destinée à former la ou les couches externes de l'enroulement, afin de conférer une capacité de déformation élastique significative à cette deuxième portion, et pouvoir ainsi absorber l'énergie communiquée par l'aube en se déformant puis pouvoir restituer cette énergie à l'aube en revenant à sa forme initiale.

L'invention repose donc sur la mise en œuvre de deux matériaux différents, à savoir le carbone et le verre, localisés dans des zones particulières du renfort fibreux, afin de répondre, de manière optimale, aux sollicitations du carter lors d'un événement de perte d'aube tout en limitant la masse de ce dernier.

Dans un exemple de réalisation, les fils ou torons de trame en fibres de verre dans la deuxième portion sont présents du côté d'une face externe de la texture.

La face externe est destinée à former la face radialement externe de la texture fibreuse, une fois celle-ci enroulée pour former le renfort fibreux du carter.

Les inventeurs ont constaté que, à l'intérieur d'un tour donné de l'enroulement, la partie de la texture située du côté de la face externe était la plus sollicitée en déformation lors de l'impact avec une aube détachée.

Ainsi, le fait de positionner les fils ou torons de trame en verre du côté de cette face externe permet d'améliorer davantage encore la résistance du carter à la déformation imposée lors de l'impact avec une aube détachée.

Dans un exemple de réalisation, une partie seulement des fils ou torons de trame de la deuxième portion sont en fibres de verre, les autres fils ou torons de trame de la deuxième portion étant en fibres de carbone.

Le fait d'avoir dans la deuxième portion une présence mixte de fils ou torons de trame en verre et de fils ou torons de trame en carbone permet avantageusement d'améliorer davantage encore la résistance du carter à l'impact avec une aube détachée.

Dans un exemple de réalisation, la texture fibreuse comprend en outre des fils ou torons de chaîne en fibres de verre présents du côté d'une face externe de la texture fibreuse, les autres fils ou torons de chaîne de la texture fibreuse étant en fibres de carbone.

Le fait d'ajouter des fils ou torons de chaine en verre permet d'améliorer davantage encore la résistance du carter à la déformation imposée lors de l'impact avec une aube détachée. Les fils ou torons de chaine en verre sont ici localisés du côté de la face externe qui constitue une région sollicitée en déformation, et le reste des fils ou torons de chaine est en carbone. Cela permet d'améliorer davantage encore la déformabilité tout en maintenant un niveau de rigidité satisfaisant dans le renfort fibreux.

En particulier, les fils ou torons de chaine en fibres de verre peuvent être présents dans une zone centrale dans la direction latérale située en retrait des premier et deuxième bords latéraux et qui s'étend sur une largeur déterminée inférieure à la largeur de ladite texture fibreuse.

La zone centrale est destinée à être présente en regard des aubes et définit la zone de rétention du carter à obtenir. Cette zone de rétention du carter a pour fonction de retenir les débris, particules ou objets ingérés en entrée du moteur, ou les aubes ou fragments d'aube détachés et projetés radialement par centrifugation contre le carter.

Les fils ou torons de chaine en verre sont dans ce dernier cas localisés dans une région fortement sollicitée en déformation, i.e. du côté de la face externe et dans la zone centrale, et le reste des fils ou torons de chaine est en carbone. Cela permet d'améliorer davantage encore la déformabilité tout en maintenant un niveau de rigidité satisfaisant dans le renfort fibreux.

Dans un exemple de réalisation, les fils ou torons en fibres de carbone et les fils ou torons en fibres de verre présents dans la texture fibreuse présentent un titre similaire.

Une telle caractéristique est avantageuse car en utilisant dans la texture des fils ou torons de taille similaire, l'architecture textile n'est pas sensiblement modifiée, ce qui permet de conserver un embuvage similaire et des tailles de poches de matrice similaires dans le carter composite.

L'invention vise également une préforme fibreuse de carter aéronautique comprenant un enroulement sur plusieurs tours d'une texture fibreuse telle que décrite plus haut, la première portion étant située du côté d'une face radialement interne de la préforme, et la deuxième portion étant située du côté d'une face radialement externe de la préforme.

L'invention vise également un carter de turbine à gaz en un matériau composite, comprenant un renfort fibreux constitué d'une préforme fibreuse telle que décrite plus haut, et une matrice densifiant le renfort fibreux.

Dans un exemple de réalisation, ledit carter est un carter de soufflante de turbine à gaz.

L'invention vise également un moteur aéronautique à turbine à gaz ayant un carter tel que décrit plus haut.

### Brève description des dessins

D'autres caractéristiques et avantages de l'invention ressortiront de la description suivante, donnée à titre non limitatif, en référence aux dessins annexés, sur lesquels :
- la figure 1 est une vue schématique en perspective d'un métier à tisser montrant le tissage tridimensionnel d'une texture fibreuse,
- la figure 2 est une vue schématique en perspective d'une texture fibreuse conformément à un mode de réalisation de l'invention,
- la figure 3 est une coupe transversale prise au niveau de la première portion de la texture fibreuse de la figure 2 et montrant un plan d'armure de tissage,
- la figure 4 est une coupe transversale prise au niveau de la deuxième portion de la texture fibreuse de la figure 2 et montrant un plan d'armure de tissage,
- la figure 5 est une vue schématique en perspective montrant l'enroulement d'une texture fibreuse sur un outillage de mise en forme,
- la figure 6 est une demi-vue en coupe axiale d'une préforme de carter obtenue par enroulement d'une texture fibreuse comme montré sur la figure 5,
- la figure 7 est une vue en coupe montrant le positionnement de secteurs d'injection sur la préforme du carter de la figure 6,
- la figure 8 est une vue en perspective d'un moteur aéronautique conformément à un mode de réalisation de l'invention,
- la figure 9 est une coupe transversale prise au niveau de la première portion d'une variante de texture fibreuse selon l'invention et montrant un plan d'armure de tissage, et
- la figure 10 est une coupe transversale prise au niveau de la deuxième portion de cette variante de texture fibreuse et montrant un plan d'armure de tissage.

### Description détaillée de modes de réalisation

L'invention s'applique d'une manière générale à des textures fibreuses destinées à la fabrication de carters en matériau composite, ces carters comportant un fût ou une virole avec des brides annulaires à leurs extrémités.

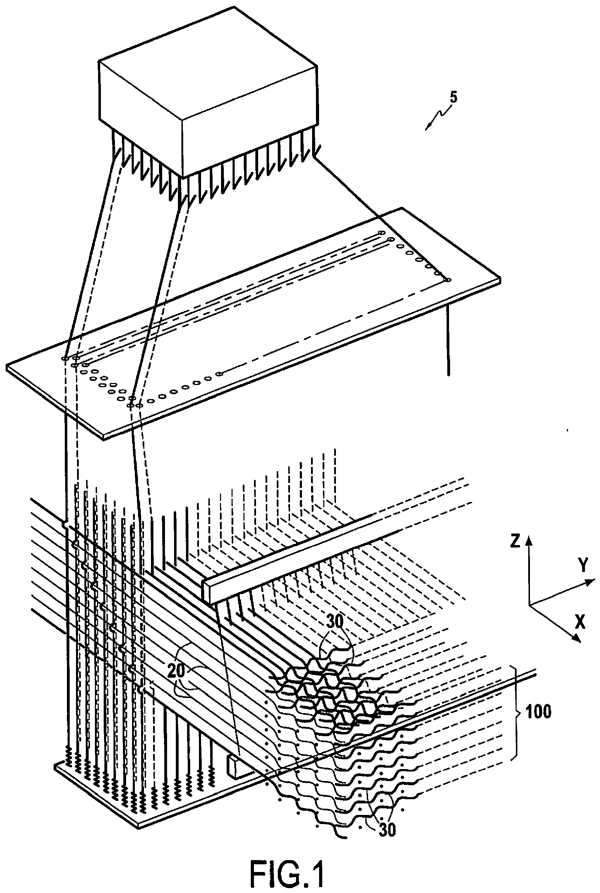

Comme représentée sur la figure 1, une texture fibreuse 100 est réalisée de façon connue par tissage au moyen d'un métier à tisser de type jacquard 5 sur lequel on a disposé un faisceau de fils de chaîne ou torons 20 en une pluralité de couches, les fils de chaîne étant liés par des fils ou torons de trame 30.

La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables.

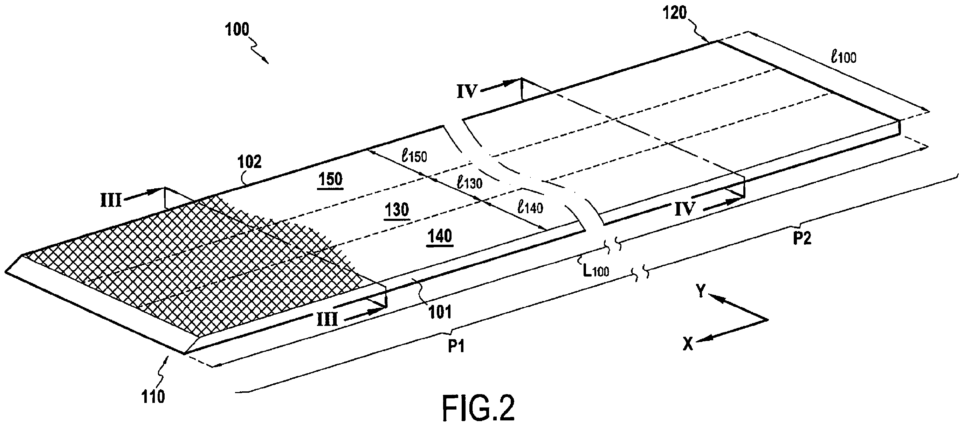

Comme illustrée sur la figure 2, la texture fibreuse 100 présente une forme de bande qui s'étend en longueur dans une direction longitudinale X correspondant à la direction de défilement des fils ou torons de chaîne 20 et en largeur ou transversalement dans une direction latérale Y entre un premier et un deuxième bords latéraux 101 et 102, la direction latérale Y correspondant à la direction des fils ou torons de trame 30. La texture fibreuse s'étend longitudinalement sur une longueur déterminée L₁₀₀ dans la direction X entre une partie proximale 110 destinée à former le début de l'enroulement d'une préforme fibreuse sur un outillage de mise en forme et une partie distale 120 destinée à former la fin de l'enroulement de la préforme fibreuse.

La texture fibreuse présente en outre une zone centrale 130 s'étendant sur une largeur déterminée l₁₃₀ dans la direction Y, la zone centrale 130 étant destinée à former le fût ou la virole du carter. La zone centrale 130 est destinée à être présente en regard des aubes et définit la zone de rétention du carter à obtenir. La zone centrale 130 est située en retrait des premier 101 et deuxième 102 bords latéraux et s'étend sur une largeur déterminée l₁₃₀ inférieure à la largeur l₁₀₀ de la texture 100. La zone centrale 130 est à une position intermédiaire entre les premier et deuxième bords latéraux 101 et 102. La zone centrale 130 est délimitée entre deux zones latérales 140 et 150 s'étendant chacune sur une largeur déterminée, respectivement l₁₄₀ et l₁₅₀, dans la direction Y. La première zone latérale 140 s'étend entre le premier bord latéral 101 et la zone centrale 130. La deuxième zone latérale 150 s'étend entre le deuxième bord latéral 102 et la zone centrale 130. Chacune des zones latérales 140 et 150 est destinée au moins en partie à former une bride annulaire du carter.

La longueur L₁₀₀ de la texture fibreuse 100 est déterminée en fonction de la circonférence de l'outillage ou du moule de mise en forme de manière à permettre la réalisation d'un nombre de tours déterminé de la texture fibreuse, par exemple quatre tours.

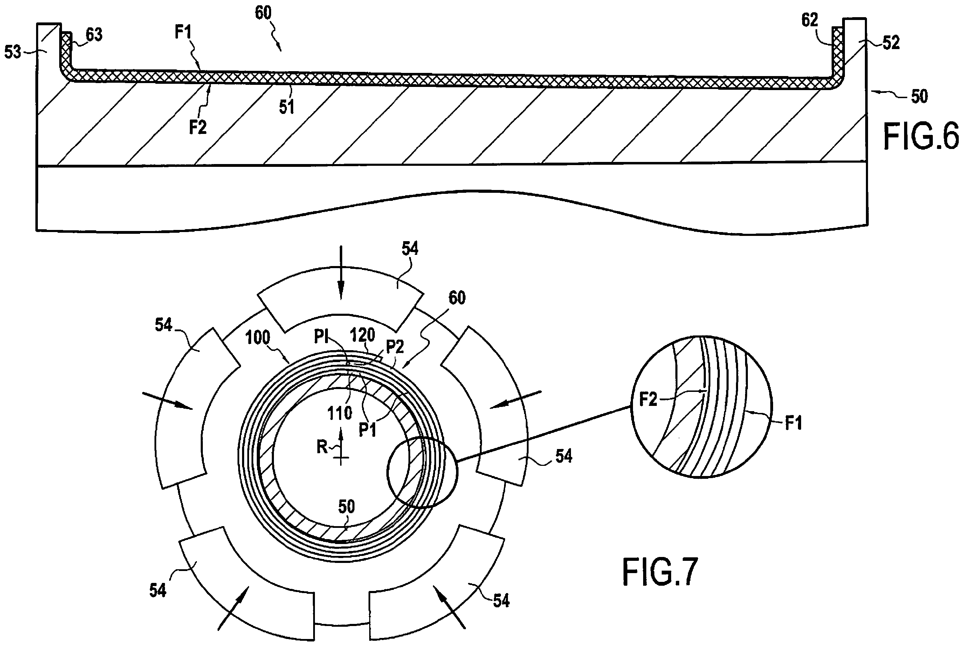

La texture fibreuse 100 comporte une première portion P1 présente entre la partie proximale 110 et une partie intermédiaire PI de la texture fibreuse (la partie intermédiaire PI est visible sur la figure 7). La première portion P1 est destinée à former la première partie de l'enroulement formant le renfort fibreux du carter (partie radialement interne de cet enroulement, voir figure 7 qui fait figurer la direction radiale R). La partie intermédiaire PI peut être située à mi-longueur de la texture fibreuse 100, ou plus généralement entre le quart et le trois-quart de la longueur de la texture fibreuse 100, par exemple.

La texture fibreuse 100 comporte en outre une deuxième portion P2, distincte de la première portion P1, et présente entre la partie intermédiaire PI et la partie distale 120. La deuxième portion P2 est destinée à former la deuxième partie de l'enroulement formant le renfort fibreux du carter (partie radialement externe de cet enroulement).

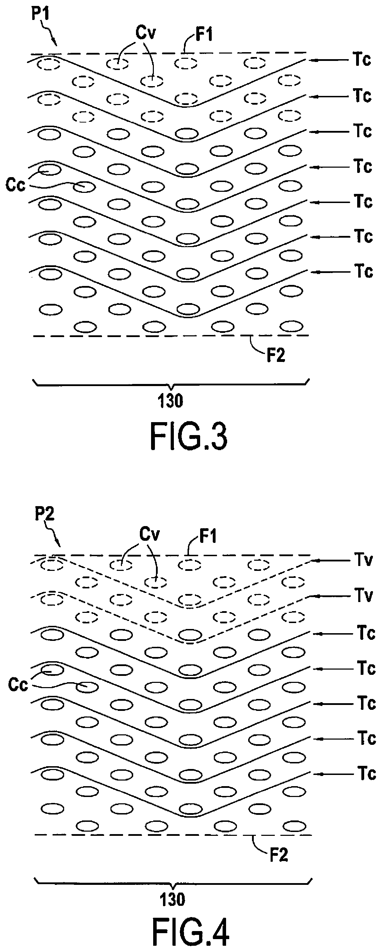

Les figures 3 et 4 illustrent chacune un plan de l'armure de tissage interlock de la texture fibreuse 100 situé respectivement au niveau de la première portion P1 et de la deuxième portion P2.

Les exemples de plans d'armure illustrés aux figures 3 et 4 comprennent 7 couches de trame et 8 couches de chaîne. Dans l'armure interlock illustrée, une couche de chaîne est formée de deux demi-couches de chaîne adjacentes décalées l'une par rapport à l'autre dans le sens trame. On a donc 16 demi-couches de chaîne positionnées en quinconce. Chaque couche de trame lie 3 demi-couches de chaîne. On pourrait aussi adopter une disposition non en quinconce, les fils de chaine de deux couches de chaine voisines étant alignés sur des mêmes colonnes. Des armures de tissage de type interlock utilisables sont décrites dans le document WO 2006/136755.

Comme illustré à la figure 3, la première portion P1 comporte des fils ou torons de trame en fibres de carbone, notés Tc. L'intégralité des fils ou torons de trame de la première portion P1 peut être en fibres de carbone.

Dans l'exemple illustré, la texture fibreuse comprend des fils ou torons de chaine en fibres de verre, notés Cv, ainsi que des fils ou torons de chaine en fibres de carbone, notés Cc.

Les fils ou torons de chaine en fibres de verre Cv sont présents du côté de la face externe F1 de la texture fibreuse. Cette face externe F1 est destinée à former la face radialement externe de la préforme fibreuse, une fois la texture enroulée (voir figure 7). En particulier, des fils ou torons de chaine en fibres de verre Cv sont présents sur la face externe F1 de la texture fibreuse. Les fils ou torons de chaine en fibres de verre Cv peuvent être présents au moins dans la zone centrale 130, laquelle est la plus sollicitée mécaniquement lors de l'impact avec une aube détachée, afin conférer à cette zone une déformabilité optimale. Les fils ou torons de chaine en fibres de verre Cv peuvent être présents uniquement dans cette zone centrale 130. En variante, les fils ou torons de chaine en fibres de verre Cv peuvent être présents dans la zone centrale 130 et dans les zones latérales 140 et 150.

Dans l'exemple illustré, les autres fils ou torons de chaîne de la texture fibreuse sont en fibres de carbone, et notés Cc. Ces fils ou torons de chaine en fibres de carbone Cc sont, en particulier, présents du côté de la face interne F2 de la texture fibreuse. Cette face interne F2 est destinée à former la face radialement interne de la préforme fibreuse, une fois la texture enroulée (voir figure 7). En particulier, des fils ou torons de chaine en fibres de carbone Cc sont présents sur la face interne F2 de la texture fibreuse. Dans cet exemple, des fils ou torons de chaine en fibres de carbone sont en outre présents dans les zones latérales 140 et 150.

Comme illustré à la figure 4, la deuxième portion P2 comporte des fils ou torons de trame en fibres de verre, notés Tv, et des fils ou torons de trame en fibres de carbone Tc. Ainsi, dans l'exemple illustré une partie seulement des fils ou torons de trame de la deuxième portion P2 sont en fibres de verre, les autres fils ou torons de trame de la deuxième portion P2 étant ici en fibres de carbone. On ne sort toutefois pas du cadre de l'invention lorsque l'intégralité des fils ou torons de trame de la deuxième portion sont en fibres de verre. Les fils ou torons de trame en fibres de verre Tv sont présents du côté de la face externe F1 de la texture fibreuse. En particulier, des fils ou torons de trame en fibres de verre Tv sont présents sur la face externe F1 de la texture fibreuse. Les fils ou torons de trame en fibres de carbone Tc sont, en particulier, présents du côté de la face interne F2 de la texture fibreuse.

Il y a donc une évolution de la nature des fils ou torons de trame lorsque l'on se déplace le long de la direction longitudinale X de la texture fibreuse 100.

On vient de décrire un exemple dans lequel la texture fibreuse a une armure de tissage interlock à 7 couches de trame et 8 couches de chaine. On ne sort toutefois pas du cadre de l'invention lorsque le nombre de couches de trame et de chaine est différent, ou lorsque la texture fibreuse présente une armure de tissage différente d'une armure interlock.

Comme évoqué plus haut, il est par ailleurs avantageux que les fils ou torons en fibres de carbone et les fils ou torons en fibres de verre présents dans la texture fibreuse présentent un titre similaire. Le rapport |T2-T1| / T1 peut, par exemple, être inférieur ou égal à 10%, où T1 désigne le titre des fils ou torons en fibres de carbone, T2 désigne le titre des fils ou torons en fibres de verre, et |.| désigne la valeur absolue.

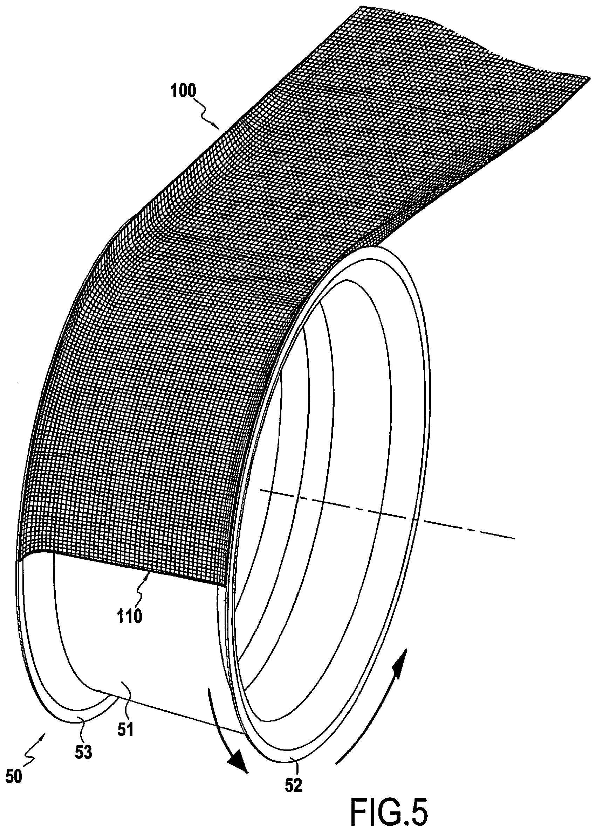

Comme illustré sur la figure 5, un renfort fibreux de carter est formé par enroulement sur un mandrin 50 de la texture fibreuse 100 décrite précédemment, le renfort fibreux constituant une préforme fibreuse tubulaire complète d'un carter formant une seule pièce. A cet effet, le mandrin 50 présente une surface externe 51 dont le profil correspond à la surface interne du carter à réaliser. Le mandrin 50 comporte également deux flasques 52 et 53 pour former des parties de préforme fibreuse 62 et 63 correspondant aux brides du carter (les brides 62 et 63 sont visibles à la figure 6). Le ou les tours situés radialement vers l'intérieur de la préforme correspondent à la première portion P1 de la texture fibreuse et le ou les tours situés radialement vers l'extérieur de la préforme correspondent à la deuxième portion P2 de la texture fibreuse.

La figure 6 montre une vue en coupe de la préforme fibreuse 60 obtenue après enroulement de la texture fibreuse 100 en plusieurs couches sur le mandrin 50. Le nombre de couches ou spires est fonction de l'épaisseur désirée et de l'épaisseur de la texture fibreuse. Il est de préférence au moins égal à 2. Dans l'exemple décrit ici, la préforme 60 comprend 4 couches de texture fibreuse 100.

On procède ensuite à la densification de la préforme fibreuse 60 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 7, la préforme fibreuse 60 est ici placée entre une pluralité de secteurs 54 formant contre-moule et le mandrin 50 formant support, ces éléments présentant respectivement la forme extérieure et la forme intérieure du carter à réaliser. Ensuite, on injecte le précurseur liquide de matrice, par exemple une résine, dans tout le logement pour imprégner la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse peut être réalisée par le procédé bien connu de moulage par transfert dit RTM (« Resin Transfert Moulding »). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

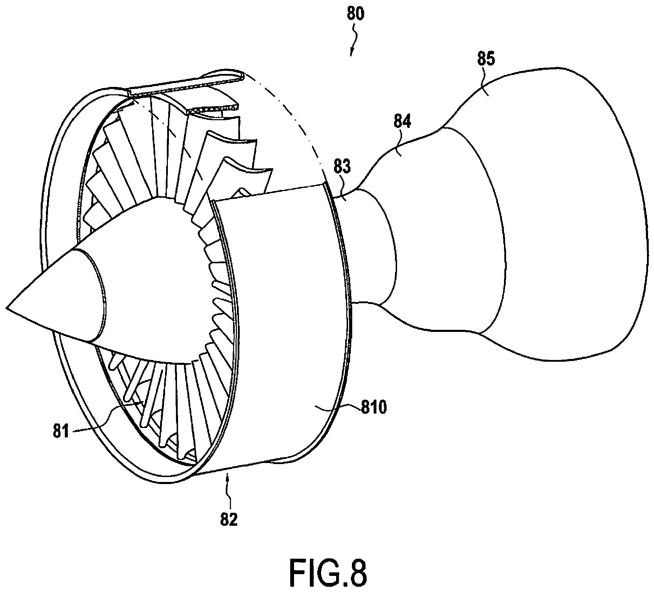

Après l'injection et la polymérisation, la pièce est démoulée. La pièce est finalement détourée pour enlever l'excès de résine et les chanfreins sont usinés pour obtenir un carter 810 présentant une forme de révolution comme illustré sur la figure 8.

Le carter 810 représenté sur la figure 8 est un carter d'une soufflante de moteur aéronautique à turbine à gaz 80. Un tel moteur, comme montré très schématiquement par la figure 8 comprend, de l'amont vers l'aval dans le sens de l'écoulement de flux gazeux, une soufflante 81 disposée en entrée du moteur, un compresseur 82, une chambre de combustion 83, une turbine haute-pression 84 et une turbine basse pression 85. Le moteur est logé à l'intérieur d'un carter comprenant plusieurs parties correspondant à différents éléments du moteur. Ainsi, la soufflante 81 est entourée par le carter 810.

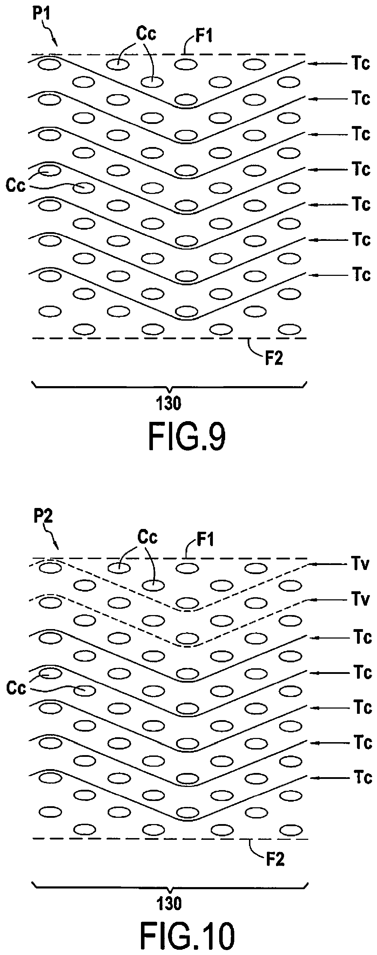

On a représenté aux figures 9 et 10 une variante de texture fibreuse selon l'invention, dans laquelle l'intégralité des fils ou torons de chaine sont en carbone (fils ou torons de chaine Cc).

La texture fibreuse comprend dans sa deuxième portion P2 des fils ou torons de trame Tv en verre, ces derniers sont situés du côté de la face externe F1 de la texture comme dans le mode de réalisation précédemment décrit. Selon cet exemple illustré, la texture fibreuse comprend en outre des fils ou torons de trame Tc en carbone dans la première portion P1 et dans la deuxième portion P2. L'intégralité des fils ou torons de trame de la première portion P1 est en carbone, selon cet exemple.

## Revendications

1. Texture fibreuse (100) présentant une forme de bande s'étendant dans une direction longitudinale (X) sur une longueur déterminée (L₁₀₀) entre une partie proximale (110) et une partie distale (120) et dans une direction latérale (Y) sur une largeur déterminée (l₁₀₀) entre un premier bord latéral (101) et un deuxième bord latéral (102), la texture fibreuse présentant un tissage tridimensionnel ou multicouche entre une pluralité de couches de fils ou torons de chaîne (20) s'étendant dans la direction longitudinale et une pluralité de couches de fils ou torons de trame (30) s'étendant dans la direction latérale,
**caractérisée en ce qu'**une première portion (P1) rigide de la texture fibreuse présente entre la partie proximale (110) et une partie intermédiaire (PI) de la texture fibreuse comporte des fils ou torons de trame (Tc) en fibres de carbone et **en ce qu'**une deuxième portion (P2) élastiquement déformable de la texture fibreuse présente entre la partie intermédiaire et la partie distale comporte des fils ou torons de trame (Tv) en fibres de verre.

2. Texture fibreuse (100) selon la revendication 1, dans laquelle les fils ou torons de trame (Tv) en fibres de verre dans la deuxième portion (P2) sont présents du côté d'une face externe (F1) de la texture.

3. Texture fibreuse (100) selon la revendication 1 ou 2, dans laquelle une partie seulement des fils ou torons de trame de la deuxième portion (P2) sont en fibres de verre, les autres fils ou torons de trame de la deuxième portion étant en fibres de carbone.

4. Texture fibreuse (100) selon l'une quelconque des revendications 1 à 3, comprenant en outre des fils ou torons de chaîne (Cv) en fibres de verre présents du côté d'une face externe (F1) de la texture, les autres fils ou torons de chaîne de la texture fibreuse étant en fibres de carbone.

5. Texture fibreuse (100) selon la revendication 4, dans laquelle les fils ou torons de chaine (Cv) en fibres de verre sont présents dans une zone centrale (130) dans la direction latérale située en retrait des premier et deuxième bords latéraux (101 ; 102) et qui s'étend sur une largeur déterminée (l₁₃₀) inférieure à la largeur (l₁₀₀) de ladite texture fibreuse.

6. Texture fibreuse (100) selon l'une quelconques des revendications 1 à 5, dans laquelle les fils ou torons (Cc ; Tc) en fibres de carbone et les fils ou torons (Cv ; Tv) en fibres de verre présents dans la texture fibreuse présentent un titre similaire.

7. Préforme fibreuse (60) de carter aéronautique (810) comprenant un enroulement sur plusieurs tours d'une texture fibreuse (100) selon l'une quelconque des revendications 1 à 6, la première portion (P1) étant située du côté d'une face radialement interne (F2) de la préforme, et la deuxième portion (P2) étant située du côté d'une face radialement externe (F1) de la préforme.

8. Carter (810) de turbine à gaz en un matériau composite, comprenant un renfort fibreux constitué d'une préforme fibreuse (60) selon la revendication 7, et une matrice densifiant le renfort fibreux.

9. Carter (810) selon la revendication 8, dans lequel ledit carter est un carter de soufflante de turbine à gaz.

10. Moteur aéronautique à turbine à gaz (80) ayant un carter (810) selon la revendication 8 ou 9.

## Patentansprüche

1. Fasertextur (100), die eine Form eines Bandes aufweist, das sich in einer Längsrichtung (X) über eine festgelegte Länge (L₁₀₀) zwischen einem proximalen Teil (110) und einem distalen Teil (120) und in einer Seitenrichtung (Y) über eine festgelegte Breite (l₁₀₀) zwischen einem ersten seitlichen Rand (101) und einem zweiten seitlichen Rand (102) erstreckt, wobei die Fasertextur ein dreidimensionales oder Mehrschicht-Gewebe zwischen einer Vielzahl von Schichten aus Kettfäden oder - strängen (20) aufweist, die sich in der Längsrichtung erstrecken, und einer Vielzahl von Schichten aus Schussfäden oder -strängen (30), die sich in der seitlichen Richtung erstrecken,
**dadurch gekennzeichnet, dass** ein starrer erster Abschnitt (P1) der Fasertextur, der zwischen dem proximalen Teil (110) und einem Übergangsteil (PI) der Fasertextur vorhanden ist, Schussfäden oder - stränge (Tc) aus Kohlenstofffasern aufweist und dass ein elastisch verformbarer zweiter Abschnitt (P2) der Fasertextur, der zwischen dem Übergangsteil und dem distalen Teil vorhanden ist, Schussfäden oder - stränge (Tv) aus Glasfasern aufweist.

2. Fasertextur (100) nach Anspruch 1, wobei die Schussfäden oder -stränge (Tv) aus Glasfasern im zweiten Abschnitt (P2) auf der Seite einer äußeren Fläche (F1) der Textur vorhanden sind.

3. Fasertextur (100) nach Anspruch 1 oder 2, wobei nur ein Teil der Schussfäden oder -stränge des zweiten Abschnitts (P2) aus Glasfasern ist, wobei die anderen Schussfäden oder -stränge des zweiten Abschnitts aus Kohlenstofffasern sind.

4. Fasertextur (100) nach einem der Ansprüche 1 bis 3, umfassend ferner Kettfäden oder -stränge (Cv) aus Glasfasern, die auf der Seite einer äußeren Fläche (F1) der Textur vorhanden sind, wobei die anderen Kettfäden oder -stränge der Fasertextur aus Kohlenstofffasern sind.

5. Fasertextur (100) nach Anspruch 4, wobei die Kettfäden oder -stränge (Cv) aus Glasfasern in einer zentralen Zone (130) in der seitlichen Richtung vorhanden sind, die sich vom ersten und zweiten seitlichen Rand (101; 102) zurückgezogen befindet und die sich über eine festgelegte Breite (l₁₃₀) erstreckt, die kleiner als die Breite (l₁₀₀) der Fasertextur ist.

6. Fasertextur (100) nach einem der Ansprüche 1 bis 5, wobei die Fäden oder Stränge (Cc; Tc) aus Kohlenstofffasern und die Fäden oder Stränge (Cv; Tv) aus Glasfasern, die in der Fasertextur vorhanden sind, einen ähnlichen Titer aufweisen.

7. Faservorform (60) eines Gehäuses (810) eines Fluggeräts, umfassend eine Wicklung über mehrere Umdrehungen einer Fasertextur (100) nach einem der Ansprüche 1 bis 6, wobei sich der erste Abschnitt (P1) auf der Seite einer radial inneren Fläche (F2) der Vorform befindet und sich der zweite Abschnitt (P2) auf der Seite einer radial äußeren Fläche (F1) der Vorform befindet.

8. Gasturbinengehäuse (810) aus einem Verbundwerkstoff, umfassend eine Faserverstärkung aus einer Faservorform (60) nach Anspruch 7 und einer die Faserverstärkung verdichtenden Matrix.

9. Gehäuse (810) nach Anspruch 8, wobei das Gehäuse ein Gehäuse eines Gasturbinengebläses ist.

10. Fluggerätemotor mit Gasturbine (80) mit einem Gehäuse (810) nach Anspruch 8 oder 9.

## Claims

1. A fibrous structure (100) having the form of a band extending in a longitudinal direction (X) over a given length (L₁₀₀) between a proximal part (110) and a distal part (120) and in a lateral direction (Y) over a given width (l₁₀₀) between a first side edge (101) and a second side edge (102), the fibrous structure having a three-dimensional or multilayer weave between a plurality of layers of warp yarns or strands (20) extending longitudinally and a plurality of layers of weft yarns or strands (30) extending laterally,
**characterized in that** a first rigid portion (P1) of the fibrous structure present between the proximal part (110) and an intermediate part (PI) of the fibrous structure comprises carbon fiber weft yarns or strands (Tc) and **in that** a second elastically deformable portion (P2) of the fibrous structure present between the intermediate part and the distal part comprises glass fiber weft yarns or strands (Tv).

2. The fibrous structure (100) as claimed in claim 1, wherein the glass fiber weft yarns or strands (Tv) in the second portion (P2) are present on the side of an outer face (F1) of the structure.

3. The fibrous structure (100) as claimed in claim 1 or 2, wherein only a portion of the weft yarns or strands of the second portion (P2) are made of glass fibers, the other weft yarns or strands of the second portion being made of carbon fibers.

4. The fibrous structure (100) as claimed in any one of claims 1 to 3, further comprising glass fiber warp yarns or strands (Cv) present on the side of an outer face (F1) of the structure, the other warp yarns or strands of the fibrous structure being of carbon fibers.

5. The fibrous structure (100) as claimed in claim 4, wherein the glass fiber warp yarns or strands (Cv) are present in a central zone (130) laterally set back from the first and second side edges (101; 102) and which extends over a given width (l₁₃₀) which is less than the width (l₁₀₀) of said fibrous structure.

6. The fibrous structure (100) as claimed in any one of claims 1 to 5, wherein the carbon fiber yarns or strands (Cc; Tc) and the glass fiber yarns or strands (Cv; Tv) present in the fibrous structure have a similar titer.

7. A fibrous preform (60) for an aircraft casing (810) comprising a winding over a plurality of turns of a fibrous structure (100) as claimed in any one of claims 1 to 6, the first portion (P1) being located on the side of a radially inner face (F2) of the preform, and the second portion (P2) being located on the side of a radially outer face (F1) of the preform.

8. A gas turbine engine casing (810) of a composite material, comprising a fibrous reinforcement consisting of a fibrous preform (60) as claimed in claim 7, and a matrix densifying the fibrous reinforcement.

9. The casing (810) as claimed in claim 8, wherein said casing is a gas turbine fan casing.

10. An aircraft gas turbine engine (80) having a casing (810) as claimed in claim 8 or 9.
